# EUROPÄISCHE PATENTANMELDUNG

(11) **EP 4 687 284 A1**
(43) Veröffentlichungstag der Anmeldung: **04.02.2026**
(21) Anmeldenummer: 25190838.0
(22) Anmeldetag: 21.07.2025
(51) Int. Cl.: H02P 25/022, H02P 29/50

(54) **FREMDERREGTE SYNCHRONMASCHINE UND TRAKTIONSNETZ**

(30) Priorität: 30.07.2024 DE 102024207162
(71) Anmelder: VOLKSWAGEN AKTIENGESELLSCHAFT, 38440 Wolfsburg (DE)
(72) Erfinder: Enzinger, Tobias, 38440 Wolfsburg (DE); Arndt, Bastian, 38440 Wolfsburg (DE); Olbrich, Peter, 38440 Wolfsburg (DE); Fuchs, Michael, 38440 Wolfsburg (DE)

(57) **Zusammenfassung**

Die Erfindung betrifft eine fremderregte Synchronmaschine (3) mit einer Ansteuerschaltung, wobei die Ansteuerschaltung eine erste Schaltung (6) zur Erzeugung der Statorströme und eine zweite Schaltung (8) zur Erzeugung eines Rotorstromes aufweist, wobei die zweite Schaltung (8) mit einer Rotorwicklung der fremderregten Synchronmaschine (3) über Leitungen (9) verbunden ist, wobei zwischen der zweiten Schaltung (8) und der Rotorwicklung mindestens ein EMV-Filter (11) angeordnet ist, der mindestens einen Kern (12) aus einem magnetischen Werkstoff aufweist, wobei ein Rotor der fremderregten Synchronmaschine (3) mittels einer Masseverbindung (14) mit Masse verbunden ist, wobei die Masseverbindung (14) vom Rotor durch den mindestens einen Kern (12) geführt ist sowie ein Traktionsnetz (1).

## Beschreibung

Die Erfindung betrifft eine fremderregte Synchronmaschine und ein Traktionsnetz für ein Elektro- oder Hybridfahrzeug mit einer fremderregten Synchronmaschine.

In den meisten Antrieben für Elektro- oder Hybridfahrzeuge wird der Wechselstrom für eine Elektromaschine mittels eines Pulswechselrichters erzeugt. Pulswechselrichter erzeugen auf ihrer Ausgangsseite Richtung Elektromaschine prinzipbedingt eine Störspannung. Diese Störspannung wird über eine parasitäre kapazitive Kopplung auf den Rotor übertragen, wo diese insbesondere zwei Probleme verursacht. Einerseits kann die Störspannung auf der Rotorwelle zu Lagerströmen in den Lagern der Rotorwelle nach Masse führen, die die Oberflächenstruktur der Lager schädigen kann. Zum anderen kann die Störspannung auf der Rotorwelle über das Getriebe an Flanschwellen abgegeben werden, die sich außerhalb des Schirmbereiches des Antriebes befinden und so die Störspannung abstrahlen, was zu EMV-Problemen führen kann. Daher wird in den meisten Anwendungen die Rotorwelle mit Masse verbunden (abgemasst), sodass die Störspannung reduziert wird. Bei fremderregten Synchronmaschinen ist die Störspannung auf der Rotorwelle aufgrund der Fremderregung erhöht. Die Fremderregung wird galvanisch auf die Rotorwicklung gekoppelt und von dort kapazitiv auf die Rotorwelle gekoppelt. Dabei ist es weiter bekannt, EMV-Filter vorzusehen, um die Störstrahlung zu reduzieren. Dabei kann ein EMV-Filter den Phasenleitungen der Elektromaschine und ein weiterer EMV-Filter den Leitungen für die Fremderregung bzw. den Rotorstrom zugeordnet sein. Diese EMV-Filter weisen typischerweise einen Kern aus einem magnetischen Werkstoff auf, wobei die Leitungen durch den Kern einfach durchgeführt werden oder gegensinnig um den Kern gewickelt sind (Gleichtaktdrossel). Der magnetische Werkstoff kann dabei ein weich- oder hartmagnetischer Kern sein. Der magnetische Werkstoff kann dabei gesintert sein oder aus nanokristallinem Material sein. Häufig kommen Ferritringe zum Einsatz. Ein Problem bei fremderregten Synchronmaschinen ist, dass der Strom im Kern aufgrund des Abmassens vergrößert wird, sodass die Kerne entsprechend größer dimensioniert werden müssen, was zu Kosten- und Bauraumnachteilen führt.

Der Erfindung liegt das technische Problem zugrunde, eine fremderregte Synchronmaschine zu schaffen, bei der die Anforderungen an einen EMV-Filter reduziert sind. Ein weiteres technisches Problem ist die Schaffung eines entsprechenden Traktionsnetzes für ein Elektro- oder Hybridfahrzeug.

Die Lösung des technischen Problems ergibt sich durch eine fremderregte Synchronmaschine mit den Merkmalen des Anspruchs 1 und ein Traktionsnetz mit den Merkmalen des Anspruchs 8. Weitere vorteilhafte Ausgestaltungen der Erfindung ergeben sich aus den Unteransprüchen.

Die fremderregte Synchronmaschine weist eine Ansteuerschaltung auf, die eine erste Schaltung zur Erzeugung der Statorströme und eine zweite Schaltung zur Erzeugung eines Rotorstromes aufweist. Die erste Schaltung ist beispielsweise ein Pulswechselrichter. Die zweite Schaltung ist mit einer Rotorwicklung der fremderregten Synchronmaschine über Leitungen verbunden. Dabei können auch mehrere Rotorwicklungen vorhanden sein. Zwischen der zweiten Schaltung und der Rotorwicklung ist mindestens ein EMV-Filter angeordnet, der mindestens einen Kern aus einem magnetischen Werkstoff aufweist. Weiter ist ein Rotor der fremderregten Synchronmaschine mittels einer Masseverbindung mit Masse verbunden, wobei die Masseverbindung vom Rotor durch den mindestens einen Kern geführt ist. Der Vorteil ist, dass dadurch die Common-Mode-Ströme im Kern sich kompensieren, sodass der Kern kleiner dimensioniert werden kann.

In einer Ausführungsform sind die Leitungen und die Masseverbindung über Schleifringe mit dem Rotor verbunden. Dabei können die Schleifringe dicht beieinander angeordnet werden, sodass die Leitungen und die Masseverbindung vom EMV-Filter als Kabelbündel zu den Schleifringen geführt werden können.

In einer weiteren Ausführungsform weisen die Leitungen für die Rotorwicklung eine Schirmung auf, wobei die Masseverbindung abschnittsweise durch die Schirmung gebildet ist.

In einer Ausführungsform wird die Schirmung durch den Kern geführt, sodass die Verbindung zwischen Schirmung und Masse sehr kurz sein kann.

In einer alternativen Ausführungsform weisen die Leitungen zwischen zweiter Schaltung und dem mindestens einen Kern keine Schirmung auf, was die Durchführung durch den Kern vereinfacht.

In einer weiteren Ausführungsform ist der EMV-Filter in einem Gehäuse angeordnet, das mit Masse verbunden ist, wobei die Masseverbindung mit dem Masseanschluss des Gehäuses verbunden ist.

In einer weiteren Ausführungsform sind die Leitungen und die Masseverbindung durch den mindestens einen Kern nur durchgeführt. Bei Ausführungsformen, wo die Leitungen gegensinnig um den Kern gewickelt sind (Gleichtaktdrossel) ist vorzugsweise die Masseverbindung ebenfalls um den Kern gewickelt, was aber nicht zwingend ist.

Das Traktionsnetz weist mindestens eine fremderregte Synchronmaschine auf, wie dies zuvor beschrieben wurde.

Die Erfindung wird nachfolgend anhand bevorzugter Ausführungsbeispiele näher erläutert. Die Fig. zeigen:
- Fig. 1: ein schematische Blockschaltbild eines Traktionsnetzes eines Elektro- oder Hybridfahrzeuges in einer ersten Ausführungsform und
- Fig. 2: eine schematische Teildarstellung eines Traktionsnetzes in einer zweiten Ausführungsform.

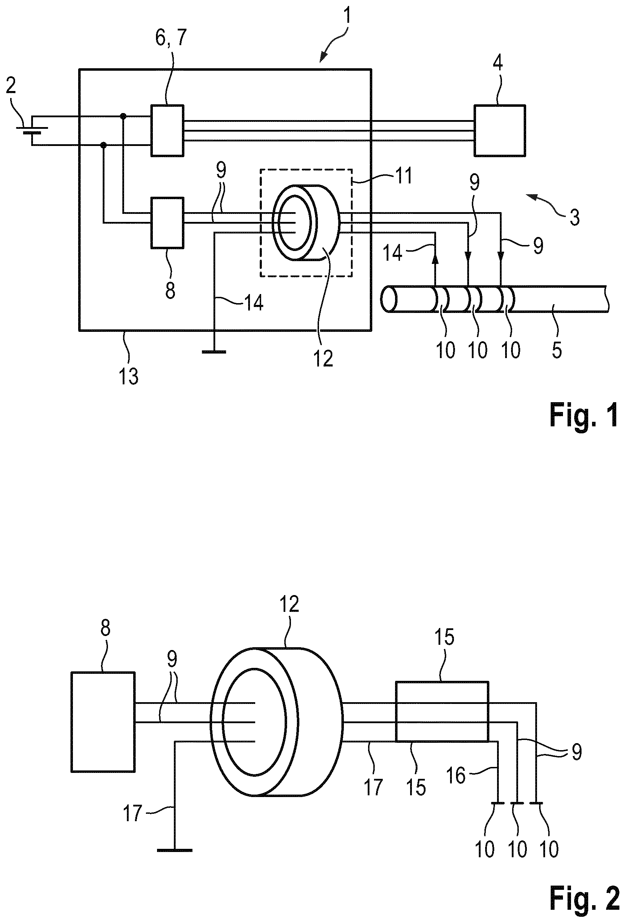

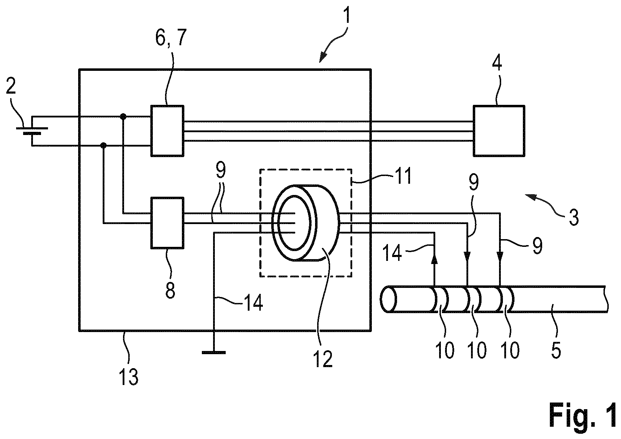

In der Fig. 1 ist schematisch ein Traktionsnetz 1 eines Elektro- oder Hybridfahrzeuges. Das Traktionsnetz 1 weist eine Hochvoltbatterie 2 auf. Weiter weist das Traktionsnetz 1 eine fremderregte Synchronmaschine 3 auf, die einen Stator 4 mit Statorwicklungen und einen Rotor mit einer Rotorwelle 5 aufweist. Eine erste Schaltung 6, die als Pulswechselrichter 7 ausgebildet ist, erzeugt Statorströme für die Statorwicklungen. Eine zweite Schaltung 8 erzeugt einen Rotorstrom. Über Leitungen 9 ist die zweite Schaltung 8 mit Schleifringen 10 verbunden, über die die nicht dargestellten Rotorwicklungen den Rotorstrom erhalten. Zwischen der zweiten Schaltung 8 und den Schleifringen 10 ist ein EMV-Filter 11 angeordnet, der mindestens einen Kern 12 aus einem magnetischen Werkstoff aufweist. Der EMV-Filter 11 kann zusätzlich Y- und/oder X-Kondensatoren aufweisen. Die erste Schaltung 6, die zweite Schaltung 8 und der EMV-Filter 11 sind in einem Gehäuse 13 angeordnet, das mit Masse verbunden ist. Dabei sei angemerkt, dass das gemeinsame Gehäuse 13 nicht zwingend ist und der EMV-Filter 11 auch ein eigenes Gehäuse aufweisen kann oder nur mit der zweiten Schaltung 8 in einem Gehäuse angeordnet ist.

Weiter weist die fremderregte Synchronmaschine 3 eine Masseverbindung 14 auf, die mit einem Schleifring 10 auf der Rotorwelle 5 verbunden ist und durch den Kern 12 geführt ist. Im Gehäuse 13 wird dann die Masseverbindung 14 mit der Masse des Gehäuses 13 verbunden. Dabei ist in den Leitungen 9 mittels Pfeilen die Stromrichtung von Gleichtaktstörsignalen (Common-Mode-Strömen) eingezeichnet, die beispielsweise von der zweiten Schaltung 8 erzeugt werden. Diese auf die Rotorelle 5 übertragenen Störungen werden nun durch die Masseverbindung 14 abgeführt, wobei die Stromrichtung in der Masseverbindung 14 ebenfalls mittels eines Pfeils dargestellt ist. Der Störstrom in den Leitungen 9 und der Masseverbindung 14 ist dabei gleich, wobei die Richtung umgekehrt ist, sodass sich die resultierenden Ströme im Kern 12 kompensieren.

In der Fig. 2 ist eine alternative Ausführungsform dargestellt, bei der die Leitungen 9 abschnittsweise mit einer Schirmung 15 ausgebildet sind, die dann abschnittsweise für die Masseverbindung 14 genutzt wird. Zur Verbindung mit dem Schleifring 10 wird dann an die Schirmung 15 eine Leitung 16 angeschlossen. Auf der anderen Seite wird dann an die Schirmung 15 eine Leitung 17 angeschlossen, die dann durch den Kern 12 geführt wird und dann mit der Masse verbunden wird. Die Masseverbindung 14 wird also durch die Leitung 16, die Schirmung 15 und die Leitung 17 gebildet.

### Bezugszeichenliste

- 1): Traktionsnetz
- 2): Hochvoltbatterie
- 3): Synchronmaschine
- 4): Stator
- 5): Rotorwelle
- 6): erste Schaltung
- 7): Pulswechselschalter
- 8): zweite Schaltung
- 9): Leitungen
- 10): Schleifringe
- 11): EMV-Filter
- 12): Kern
- 13): Gehäuse
- 14): Masseverbindung
- 15): Schirmung
- 16): Leitung
- 17): Leitung

## Patentansprüche

1. Fremderregte Synchronmaschine (3) mit einer Ansteuerschaltung, wobei die Ansteuerschaltung eine erste Schaltung (6) zur Erzeugung der Statorströme und eine zweite Schaltung (8) zur Erzeugung eines Rotorstromes aufweist, wobei die zweite Schaltung (8) mit einer Rotorwicklung der fremderregten Synchronmaschine (3) über Leitungen (9) verbunden ist, wobei zwischen der zweiten Schaltung (8) und der Rotorwicklung mindestens ein EMV-Filter (11) angeordnet ist, der mindestens einen Kern (12) aus einem magnetischen Werkstoff aufweist, wobei ein Rotor der fremderregten Synchronmaschine (3) mittels einer Masseverbindung (14) mit Masse verbunden ist, **dadurch gekennzeichnet, dass**
die Masseverbindung (14) vom Rotor durch den mindestens einen Kern (12) geführt ist.

2. Fremderregte Synchronmaschine nach Anspruch 1, **dadurch gekennzeichnet, dass** die Leitungen (9) und die Masseverbindung (14) über Schleifringe (10) mit dem Rotor verbunden sind.

3. Fremderregte Synchronmaschine nach Anspruch 1 oder 2, **dadurch gekennzeichnet, dass** die Leitungen (9) für die Rotorwicklung eine Schirmung (15) aufweisen, wobei die Masseverbindung (14) abschnittsweise durch die Schirmung gebildet ist.

4. Fremderregte Synchronmaschine nach Anspruch 3, **dadurch gekennzeichnet, dass** die Schirmung (15) durch den Kern (12) geführt ist.

5. Fremderregte Synchronmaschine nach Anspruch 3, **dadurch gekennzeichnet, dass** zwischen zweiter Schaltung (8) und dem mindestens einen Kern (12) die Leitungen (9) keine Schirmung (15) aufweisen.

6. Fremderregte Synchronmaschine nach einem der vorangegangenen Ansprüche, **dadurch gekennzeichnet, dass** der EMV-Filter (11) in einem Gehäuse (13) angeordnet ist, das mit Masse verbunden ist, wobei die Masseverbindung (14) mit dem Masseanschluss des Gehäuses (13) verbunden ist.

7. Fremderregte Synchronmaschine nach einem der vorangegangenen Ansprüche, **dadurch gekennzeichnet, dass** die Leitungen (9) und die Masseverbindung (14) durch den mindestens einen Kern (12) nur durchgeführt sind.

8. Traktionsnetz (1) eines Elektro- oder Hybridfahrzeuges, **dadurch gekennzeichnet, dass** das Traktionsnetz (1) eine fremderregte Synchronmaschine (3) nach einem der Ansprüche 1 bis 7 aufweist.
